# EUROPEAN PATENT APPLICATION

(11) **EP 1 662 165 A1**
(43) Date of publication of application: **31.05.2006**
(21) Application number: 04027894.7
(22) Date of filing: 24.11.2004
(51) Int. Cl.: F16D 55/225, B62L 1/10

(54) **Brake for use with carbon rim**

(71) Applicant: Gigantex Composite Technologies Co., Ltd., Pei Tou Town, Chang Hua Hsien (TW)
(72) Inventor: Lee, Steve, Pei Tou Town Chang Hua Hsien (TW)
(74) Representative: Viering, Jentschura & Partner

(57) **Abstract**

A brake (30) is provided for a carbon rim (10). The carbon rim (10) includes two walls, (15) a central portion (13) extending between the walls (15) and two edges (12) extending from the walls (15) beyond the central portion (13). The brake (30) includes two linings (31) and two shoes (32) for carrying the linings (31). Each of the linings (31) includes a first portion for contact with one of the walls (15) and a second portion for contact one of the edges (12). The first portion is greater that the second portion.

## Description

### Background of Invention

### 1. Field of Invention

The present invention relates to a brake for use with a carbon rim.

### 2. Related Prior Art

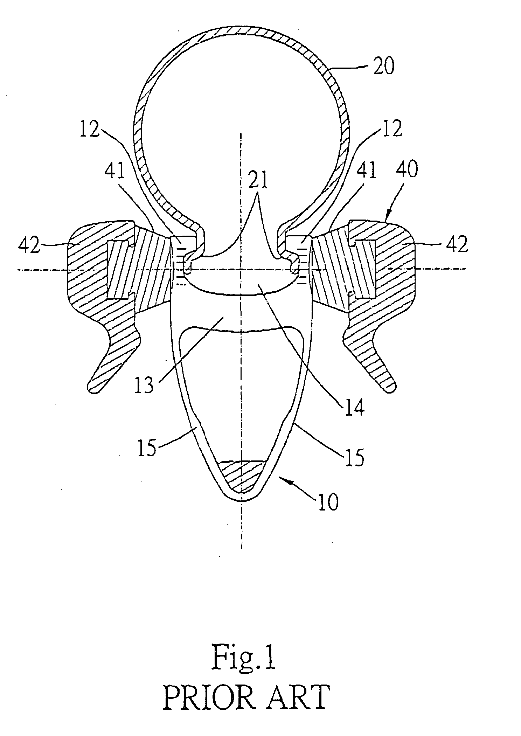

Referring to Fig. 1, a typical carbon rim 10 is used with a conventional brake 40. The typical carbon rim 10 includes two walls 15, a central portion 13 formed between the walls 15 in order to provide sufficient rigidity, and two edges 12 each extending from a related wall 15 beyond the central portion 13. Each edge 12 is in the form of a flange. A typical tire 20 includes two edges 21 compliant with the edges 12 of the carbon rim 10. The edges 21 of the tire 20 are engaged with the edges 12 of the carbon rim 10. The brake 40 includes two linings 41 for contact with the edges 12 of the carbon rim 10 and two shoes 42 to which the linings 41 are secured. In braking, the linings 41 of the brake 40 pinch the edges 12 of the carbon rim 10. A large portion of dynamic energy of a bicycle that uses the carbon rim 10 is transformed into heat. A large portion of the heat is absorbed by the edges 12 of the carbon rim 10. Thus, the edges 12 of the carbon rim 10 get hot and soft, and will very likely burst since they are thin.

The present invention is therefore intended to obviate or at least alleviate the problems encountered in prior art.

### Summary of Invention

According to the present invention, a brake is provided for a carbon rim. The carbon rim includes two walls, a central portion extending between the walls and two edges extending from the walls beyond the central portion. The brake includes two linings and two shoes for carrying the linings. Each of the linings includes a first portion for contact with one of the walls and a second portion for contact one of the edges. The first portion is greater than the second portion.

The primary advantage of the brake according to the present invention is that it ensures the strength of the edges of the carbon rim.

Other objects, advantages and novel features of the invention will become more apparent from the following detailed description in conjunction with the attached drawings.

### Brief Description of Drawings

The present invention will be described via detailed illustration of the preferred embodiment referring to the drawings.
Fig. 1 is a cross-sectional view of a typical rim used with a conventional brake.
Fig. 2 is a cross-sectional view of a typical rim used with a brake according to the preferred embodiment of the present invention.
Fig. 3 is similar to Fig. 2 but shows the typical rim pinched by the brake.

### Detailed Description of Preferred Embodiment

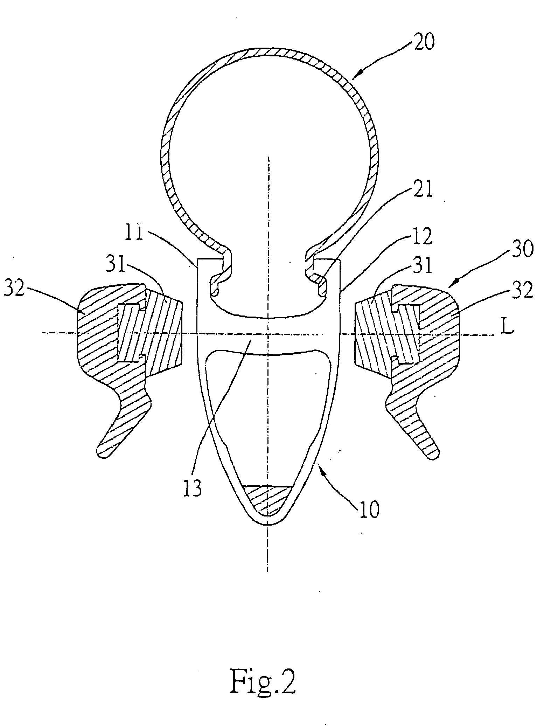

Referring to Fig. 2, a typical carbon rim 10 is used with a brake 30 according to the preferred embodiment of the present invention.

The typical carbon rim 10 includes two walls 15, a central portion 13 formed between the walls 15 in order to provide sufficient rigidity, and two edges 12 each extending from a related wall 15 beyond the central portion 13. Each edge 12 is in the form of a flange.

A typical tire 20 includes two edges 21 compliant with the edges 12 of the carbon rim 10. The edges 21 of the tire 20 are engaged with the edges 12 of the carbon rim 10.

The brake 30 includes two linings 31 and two shoes 32 to which the linings 31 are secured. Each lining 31 of the brake 30 is for contact with a portion of a related wall 15 next to the central portion 13 of the carbon rim 10.

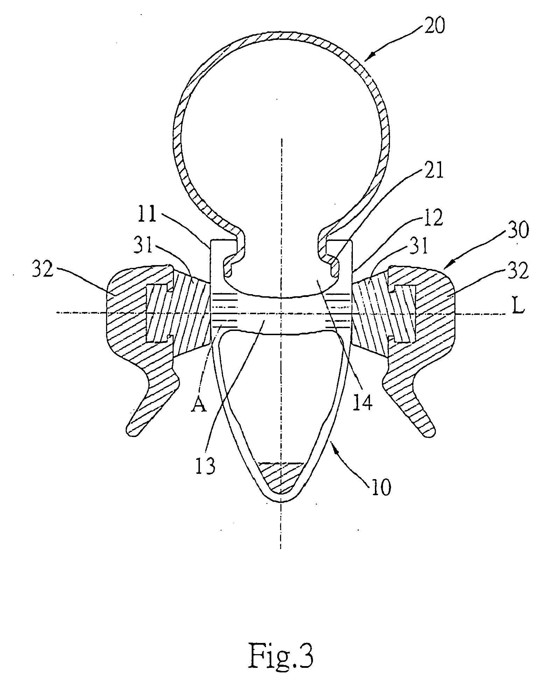

Referring to Fig. 3, in braking, the linings 31 pinch the walls 15 according to the present invention, not like the linings 41 that pinch the edges 12 as discussed in **Related Prior Art**. A portion of dynamic energy of a bicycle that uses the carbon rim 10 is transformed into heat. A portion of the heat is absorbed by the walls 15 of the carbon rim 10 and transferred to the central portion 13 of the carbon rim 10 soon. The central portion 13 of the carbon rim 10 gets hot to a limited extent and hardly gets soft. Of course, the edges 12 of the carbon rim 10 do not substantially get hot and soft, and will by no means burst.

The present invention has been described via detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A brake (30) for use with a carbon rim (10) comprising two walls (15), a central portion (13) extending between the walls (15) and two edges (12) extending from the walls (15) beyond the central portion (13), the brake (30) comprising two linings (31) and two shoes (32) for carrying the linings (31), wherein each of the linings (31) comprises a first portion for contact with one of the walls (15) and a second portion for contact one of the edges (12), wherein the first portion is greater than the second portion.

2. The brake according to claim 1 wherein each of the edges (12) is in the form of a flange for engagement with one of two edges (21) of a tire (20).

3. A brake (30) for use with a carbon rim (10) comprising two walls (15), a central portion (13) extending between the walls (15) and two edges (12) extending from the walls (15) beyond the central portion (13), the brake (30) comprising two linings (31) for contact with the walls (15) without contact with the edges and two shoes (32) for carrying the linings (31).

4. The brake according to claim 1 wherein each of the linings (31) is for contact with one of the walls (15) of the carbon rim (10) at a portion near the central portion (13) of the carbon rim (10)

5. The brake according to claim 1 wherein each of the edges (12) is in the form of a flange for engagement with one of two edges (21) of a tire (20).
